# EUROPÄISCHE PATENTSCHRIFT

(11) **EP 2 518 351 B1**
(45) Veröffentlichungstag und Bekanntmachung des Hinweises auf die Patenterteilung: **30.12.2015**
(21) Anmeldenummer: 12165004.8
(22) Anmeldetag: 20.04.2012
(51) Int. Cl.: F16C 33/38, F16C 29/06

(54) **Halter für einen Wälzkörper eines Linearwälzlagers**
Holder for a roller body of a linear roller bearing
Support pour un élément roulant d'un palier à roulement linéaire

(30) Priorität: 29.04.2011 DE 102011017760
(43) Veröffentlichungstag der Anmeldung: 31.10.2012
(73) Patentinhaber: Aktiebolaget SKF, 415 50 Göteborg (SE)
(72) Erfinder: Edelmann, Ludwig, 97717 Sulzthal (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Schonecke, Mitja

(56) Entgegenhaltungen:
- EP-A2- 1 024 305
- DE-A1- 3 245 332
- DE-U1-202004 001 812
- JP-A- 2008 121 861

## Beschreibung

Ausführungsbeispiele beziehen sich auf einen Halter für einen Wälzkörper eines Linearwälzlagers, ein Linearwälzlager und ein Verfahren zum Bereitstellen eines Linearwälzlagers.

Im Bereich der Linearsysteme werden zur möglichst reibungsarmen Führung zueinander beweglicher Bauteile Linearführung eingesetzt, die je nach verwendetem Arbeitsprinzip in Linearwälzlager und Lineargeleitlager unterteilt werden. Linearwälzlager basieren darauf, dass zwischen einem Bauteil und einem entsprechenden Gegenbauteil Wälzkörper abrollen, die mit einer Laufbahn des Bauteils und einer Gegenlaufbahn des Gegenbauteils in Berührung stehen. Als Wälzkörper werden hierbei häufig Kugeln, Zylinder, Nadeln oder Tonnen verwendet.

Linearsysteme sind hierbei nicht auf lineare Bewegungen im mathematischen Sinn, also auf Bewegung entlang einer mathematischen Geraden beschränkt. Der Begriff "linear" wird daher in diesem Bereich häufig synonym für den Begriff "translatorisch" verwendet.

Linearwälzlager werden ferner in solche mit einem begrenzten Hub bzw. einer begrenzten Amplitude und solche unterteilt, die im Prinzip eine unendliche, nicht beschränkte Bewegung ermöglichen, wobei im Falle einer konkreten Implementierungen die Amplitude bzw. der Hub des betreffenden Linearwälzlagers durch konstruktive Randbedingungen im Allgemeinen beschränkt ist, wie etwa die Länge einer entsprechenden Laufbahn, Schiene oder Profilschiene.

Diese Einteilung ist unter anderem eine Folge der Tatsache, dass bei Linearwälzlagern sich die Wälzkörper im Allgemeinen mit der Hälfte einer Relativgeschwindigkeit des Bauteils zu dem Gegenbauteil bezüglich beider Bauteile bewegen. Anders ausgedrückt bewegen sich die Wälzkörper sowohl bezüglich des Bauteils als auch bezüglich des Gegenbauteils, sodass eine Rückführung der Wälzkörper in einen Lastbereich des Linearwälzlagers häufig notwendig ist, um eine entsprechende, im Prinzip nicht beschränkte Beweglichkeit entlang einer Bewegungsrichtung des Linearwälzlagers zu ermöglichen. Daher weisen entsprechende Linearwälzlager häufig wenigstens einen Umlenkbereich und einen Rücklaufbereich auf, wobei der Umlenkbereich zwischen dem Lastbereich und dem Rücklaufbereich angeordnet ist, um eine Rückführung der Wälzkörper in dem Lastbereich hinein zu ermöglichen.

Beispiele für Linearwälzlager, die eine im Prinzip nicht beschränkte Amplitude bzw. einen nicht beschränkten Hub aufweisen, sind Profilschienenführungen mit entsprechenden Profilschienenwagen, die auf einer Profilschiene beweglich angeordnet sind. Häufig gibt die Orientierung der Profilschiene bei diesen Systemen die Bewegungsrichtung entlang einer Bewegungslinie an.

Kugeln, aber auch andere Wälzkörper, die in entsprechenden Profilschienenführungen ohne einen Käfig oder Distanzhalter zum Einsatz kommen, tendieren dazu, eine erhöhte Reibung an Stellen aufzuweisen, an denen sich die Wälzkörper berühren. Häufig resultiert dies in erhöhten Betriebsgeräuschen aufgrund einer an den entsprechenden Berührpunkten der benachbarten Wälzkörper gegensinnigen bzw. gegenseitigen Drehrichtung. Ebenso kann es gegebenenfalls zu einem erhöhten Verschleiß kommen. Daher werden bei konventionellen Systemen häufig Kugelketten oder Distanzscheiben ähnliche Zwischenstücke eingesetzt. Dieses Vorgehen kann dazu führen, dass eine Montage eines Linearwälzlagers aufwendig, unflexibel oder fehleranfällig sein kann.

Beispielsweise zeigt das Dokument EP 1024305 A2 einen Wälzkörperabstandhalter für einzelne Wälzkörper, um einen Abstand zu benachbarten Wälzkörpern in einem Linearwälzlager zu halten. Der Abstandhalter besteht aus einem biegbaren Material, sodass der Abstandshalter in Umlenkbereichen des Linearwälzlagers verbogen werden kann und den Umlenkbereich passieren kann.

Ferner beschreibt die Druckschrift JP 2008 121861 A ebenfalls einen Halter für einzelne Wälzkörper, der in Umlenkbereichen des Linearwälzlagers verbogen werden kann, um den Umlenkbereich passieren zu können.

Ausgehend hiervon besteht daher ein Bedarf, eine Montage eines Linearwälzlagers zu vereinfachen, die eine Verringerung der Berührung der Wälzkörper untereinander während des Betriebs des Linearwälzlagers ermöglicht.

Diesem Bedarf wird durch einen Halter für einen Wälzkörper eines Linearwälzlagers gemäß Anspruch 1, ein Linearwälzlager gemäß Anspruch 9 oder ein Verfahren zum Bereitstellen eines Linearwälzlagers gemäß Anspruch 10 Rechnung getragen.

Ein Halter für einen Wälzkörper eines Linearwälzlagers gemäß einem Ausführungsbeispiel ist ausgebildet, um genau einen Wälzkörper aufzunehmen und den Wälzkörper von jeweils einem in beiden Richtungen entlang einer Bewegungslinie benachbarten Wälzkörper räumlich zu trennen. Der Halter weist ein erstes Führungselement und ein zweites Führungselement auf, die entlang einer ersten Linie angeordnet sind, die senkrecht auf der Bewegungslinie steht. Wenigstens eines der Führungselemente ist ausgebildet, sodass in einer sich entlang der Bewegungslinie erstreckenden Führungsausnehmung mit zwei parallelen Führungsseitenflächen an mehr als einer Position jeweils die beiden Führungsseitenflächen jeweils an wenigstens zwei entlang der Bewegungslinie räumlich getrennten Punkten eine Kraft in einer Führungslinie auf das wenigstens eine Führungselement ausüben können, wenn der Halter den Wälzkörper aufgenommen hat, wobei die Führungslinie senkrecht auf der Bewegungslinie und der ersten Linie steht.

Bei einem Halter gemäß einem Ausführungsbeispiel kann ferner wenigstens ein Führungselement des ersten und des zweiten Führungselements wenigstens eine Führungsfläche aufweisen, die ausgebildet ist, um von einer der beiden Führungsseitenflächen über die zwei räumlich getrennten Punkte eine Kraft entlang der Führungslinie aufzunehmen, wobei die Führungsfläche einen Abschnitt aufweist, der in einer Querschnittsebene, die durch die Führungslinie und die Bewegungslinie aufgespannt wird, in einem zentralen Bereich einer Querschnittsfläche des Halters in der Querschnittsebene eine Krümmung zu einem Mittelpunkt der Querschnittsfläche hin aufweist. Anders ausgedrückt kann ein Halter gemäß einem Ausführungsbeispiel eine konkave Führungsfläche bzw. einen konkaven Abschnitt einer Führungsfläche aufweisen, der eine Führung des Halters in einem gekrümmten Bereich, beispielsweise in einem Umlenkbereich zusätzlich unterstützt. Bei einem Ausführungsbeispiel kann so in dem Abschnitt der Führungsfläche diese eine Krümmung zu dem Mittelpunkt hin aufweisen, die einem inneren Krümmungsradius einer Führungsausnehmung in einem Umlenkbereich eines Linearwälzlagers entspricht. Anders ausgedrückt kann die Führungsfläche oder der Abschnitt der Führungsfläche hinsichtlich seiner Form an den Umlenkbereich angepasst sein.

Ein Linearwälzlager gemäß einem Ausführungsbeispiel umfasst eine Vielzahl von Wälzkörpern, wobei wenigstens zwei der Wälzkörper jeweils in einem solchen Halter gemäß einem Ausführungsbeispiel angeordnet sind. Zwischen zwei Wälzkörpern, die jeweils in einem Halter angeordnet sind, ist höchstens ein Wälzkörper ohne Halter angeordnet.

Ein Ausführungsbeispiel eines Verfahrens zum Bereitstellen eines Linearwälzlagers umfasst ein Bereitstellen des Linearwälzlagers, ein Bereitstellen einer Vielzahl von Wälzkörpern, sodass wenigstens zwei der Wälzkörper jeweils in einem solchen Halter gemäß einem Ausführungsbeispiel angeordnet sind, und ein Bestücken des Linearwälzlagers mit den Wälzkörpern, sodass zwischen zwei Wälzkörpern, die jeweils in einem Halter angeordnet sind, höchstens ein Wälzkörper ohne Halter angeordnet ist.

Einem Ausführungsbeispiel liegt die Erkenntnis zugrunde, dass ein Linearwälzlager einfacher bereitstellbar ist, in dem ein Halter verwendet wird, der ausgebildet ist, um genau einen einzigen Wälzkörper aufzunehmen, wobei dieser jeweils von einem in beiden Richtungen entlang einer Bewegungslinie benachbarten Wälzkörper räumlich getrennt wird, sodass eine Geräuschentwicklung oder auch ein Verschleiß aufgrund eines Berührens der Wälzkörper untereinander reduziert wird. Hierdurch ist es möglich, Linearwälzlager bereitzustellen, bei denen zwischen zwei Wälzkörpern, die jeweils in einem Halter angeordnet sind, höchstens ein Wälzkörper ohne einen entsprechenden Halter angeordnet ist.

Hierbei können die Führungselemente, die entlang der ersten Linie, also senkrecht zu der Bewegungslinie angeordnet sind, aufgrund ihrer Ausformung eine Führung des Halters beispielsweise in einem Umlenkbereich eines Linearwälzlagers unterstützen. Hierbei wird unter einer Kraft auch eine Kraftkomponente in der entsprechenden Richtung oder der entsprechenden Linie verstanden.

Ein Halter gemäß einem Ausführungsbeispiel ist hierbei derart ausgestaltet, dass dieser den Wälzkörper drehbar aufnehmen bzw. halten kann.

Bei einem Ausführungsbeispiel eines Halters, bei dem die beiden räumlich getrennten Punkte bezüglich jeweils beider Führungsseitenflächen jeweils einen Abstand von wenigstens einem 0.2-fachen einer Gesamtlänge des Halters entlang der Bewegungslinie aufweisen, kann so aufgrund dieses Abstandes gegebenenfalls eine Führung verbessert werden. Bei weiteren Ausführungsbeispielen kann der Abstand wenigstens einem 0.3-fachen, wenigstens einem 0.4-fachen, wenigstens einem 0.5-fachen, wenigstens einem 0.6-fachen, wenigstens einem 0.7-fachen oder wenigstens einem 0.8-fachen der Gesamtlänge des Halters entlang der Bewegungslinie entsprechen.

Bei einem Halter gemäß einem Ausführungsbeispiel kann wenigstens eines der Führungselemente des ersten und des zweiten Führungselements einen ebenen Seitenflächenabschnitt aufweisen, der sich in einem zentralen Bereich des wenigstens einen Führungselements entlang der Bewegungslinie erstreckt und den Halter in Richtung der ersten Linie wenigstens abschnittsweise begrenzt. Eine solche Ausformung eines der Führungselemente kann gegebenenfalls neben einer entsprechenden Führung auch eine mechanisch stabilere Ausführung des Halters ermöglichen.

Bei einem Halter gemäß einem Ausführungsbeispiel kann das wenigstens eine Führungselement ferner eine weitere Führungsfläche aufweisen, die auf einer der Führungsfläche abgewandten Seite des wenigstens einen Führungselements angeordnet ist, wobei die weitere Führungsfläche einen weiteren Abschnitt aufweist, der in der Querschnittsebene auf eine Mittelgerade zuläuft, wobei die Mittelgerade den Mittelpunkt umfasst und sich entlang der Bewegungslinie erstreckt. Hierdurch ist es möglich, den Halter gemäß einem Ausführungsbeispiel weiter an einen gekrümmten Bereich, wie beispielsweise den Umlenkbereich eines Linearwälzlagers anzupassen, um so die Führungseigenschaften des Halters weiter zu unterstützen. So kann dieser Ausformung gegebenenfalls einem äußeren Krümmungsradius einer Führungsausnehmung in dem Umlenkbereich angepasst sein.

Bei einem Halter gemäß einem Ausführungsbeispiel kann das wenigstens eine Führungselement symmetrisch bezüglich einer Symmetrieebene ausgebildet sein, die durch die Bewegungslinie und die erste Linie aufgespannt wird. Durch eine solche symmetrische Ausführung des Halters kann es möglich sein, ein Bereitstellen bzw. eine Montage eines Linearwälzlagers dadurch zu vereinfachen, dass eine Gefahr einer Falschmontage durch eine Bereitstellung des Wälzkörpers mit dem Halter in einer fehlerhaften Orientierung reduziert bzw. gegebenenfalls sogar vollständig vermieden werden kann.

Ein Halter gemäß einem Ausführungsbeispiel kann ferner wenigstens eine Trennungsstruktur aufweisen, die ausgebildet ist, um den Wälzkörper von einem benachbarten Wälzkörper entlang der Bewegungslinie räumlich zu trennen, wobei die Trennungsstruktur eine Ausnehmung aufweist, die ihrerseits ausgebildet ist, um ein Schmiermittel aufzunehmen. Hierdurch kann es gegebenenfalls möglich sein, den Schmierstoff effektiv an die Wälzkörper in einem Bereich heranzubringen, an dem sich diese gegebenenfalls räumlich besonders nahe sind.

Ein Halter gemäß einem Ausführungsbeispiel kann ferner ausgebildet sein, um den Wälzkörper gegen ein Herausfallen entlang der Führungslinie zu sichern. Hierdurch kann gegebenenfalls eine Montage bzw. ein Bereitstellen eines Linearwälzlagers vereinfacht werden, da die Wälzkörper und Halter vormontierbar sind und dadurch während der Montage leichter handhabbar sind. Anders ausgedrückt kann der Halter gegebenenfalls ausgebildet sein, um den Wälzkörper alleine oder selbstständig zu halten. Der Halter kann in einem solchen Fall formschlüssig, führungsschlüssig oder formangepasst sein, um gerade das Herausfallen des Wälzkörpers zu unterbinden.

Ein Ausführungsbeispiel eines Linearwälzlagers, welches Halter gemäß Ausführungsbeispielen verwendet, kann so während des Betriebs eine geringere Geräuschentwicklung und/oder einen geringeren Verschleiß aufweisen, wobei das Linearwälzlager einfacher und damit gegebenenfalls kostengünstiger montierbar bzw. bereitstellbar ist. Entsprechend kann sich bei einem Ausführungsbeispiel eines Verfahrens zum Bereitstellen eines Linearwälzlagers dieses vereinfachen.

Ein Halter gemäß einem Ausführungsbeispiel kann einen Kunststoff, ein zähes und/oder biegewechselfestes Material, Polyoxymethylen (POM) oder Polyamide (PA) aufweisen. Hierdurch kann es möglich sein, einen Halter gegebenenfalls aus einem den Belastungen angepassten Material herzustellen, welches gleichzeitig durch ein einfaches und damit kostengünstiges Verfahren herstellbar ist. So kann gegebenenfalls ein Halter gemäß einem Ausführungsbeispiel durch ein Spritzgießen hergestellt werden.

Ausführungsbeispiele werden nachfolgend unter Bezugnahme auf die beigefügten Figuren näher beschrieben und erläutert.
Fig. 1 zeigt eine perspektivische Darstellung eines Halters gemäß einem Ausführungsbeispiel;
Fig. 2 zeigt eine perspektivische Darstellung des in Fig. 1 gezeigten Halters mit einem kugelförmigen Wälzkörper;
Fig. 3 zeigt eine Anordnung von drei kugelförmigen Wälzkörpern, die von einem Halter gemäß einem Ausführungsbeispiel gehalten werden, und zwischen denen jeweils ein kugelförmiger Wälzkörper angeordnet ist;
Fig. 4 zeigt eine Explosionsdarstellung eines Linearwälzlagers gemäß einem Ausführungsbeispiel in der Form einer Profilschienenführung;
Fig. 5 zeigt eine perspektivische Darstellung eines Einsatzes für einen Rücklaufbereich des in Fig.4 gezeigten Linearwälzlagers;
Fig.6 illustriert eine Anpassung der Form eines Halters gemäß einem Ausführungsbeispiel in einem Rücklaufbereich und einem Umlenkbereich eines Linearwälzlagers; und
Fig. 7 zeigt eine Fig. 6 vergleichbare Darstellung mit einer weiteren Ausführungsform eines Halters gemäß einem Ausführungsbeispiel.

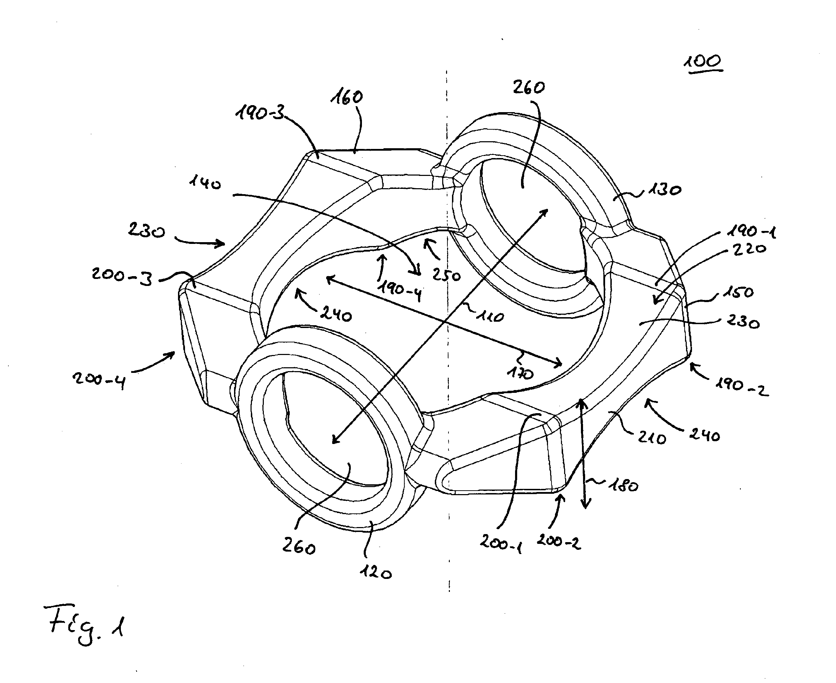

Bevor im Zusammenhang mit den Figuren 1 bis 7 Ausführungsbeispiele näher beschrieben und hinsichtlich ihrer Funktionsweise näher erläutert werden, bietet es sich an darauf hinzuweisen, dass im Rahmen der vorliegenden Beschreibung zusammenfassende Bezugszeichen für Objekte, Strukturen und andere Entitäten verwendet werden, wenn auf die betreffende Entität an sich, mehrerer entsprechende Entitäten innerhalb eines Ausführungsbeispiels oder innerhalb mehrerer Ausführungsbeispiele oder die betreffende Gattung von Entitäten näher eingegangen wird. Hierdurch ist es möglich, die Beschreibung knapper und kürzer zu halten, da unnötige Wiederholungen vermieden werden können, da Beschreibungen die sich auf eine Entität beziehen, auch auf andere Entitäten in anderen Ausführungsbeispielen übertragbar sind, soweit dies nicht explizit anders angegeben ist oder sich aus dem Zusammenhang ergibt. Im Unterschied hierzu werden, wenn einzelne Entitäten bezeichnet werden, individuelle Bezugszeichen verwendet, die auf den entsprechenden zusammenfassenden Bezugszeichen basieren. Entitäten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt werden. Es ist so beispielsweise möglich, dass mehrere Entitäten innerhalb eines Ausführungsbeispiels bezüglich eines Parameters identisch, bezüglich eines anderen Parameters jedoch unterschiedlich ausgeführt sein können.

Fig. 1 zeigt ein erstes Ausführungsbeispiel eines Halters 100 für einen Wälzkörper eines Linearwälzlagers. Der Halter 100 ist ausgebildet, um genau einen Wälzkörper aufzunehmen, der jedoch in Fig. 1 nicht gezeigt ist. Darüber hinaus ist der Halter 100 ausgebildet, um einen solchen Wälzkörper von jeweils einem in beiden Richtungen entlang einer Bewegungslinie 110 benachbarten Wälzkörper räumlich zu trennen. Zu diesem Zweck weist der Halter 100 eine erste Trennungsstruktur 120 und eine zweite Trennungsstruktur 130 auf, die entlang der Bewegungslinie 110 angeordnet sind. Die erste Trennungsstruktur 120 und die zweite Trennungsstruktur 130 sind zu beiden Seiten einer zentralen Position 140, an die der aufzunehmende Wälzkörper in den Halter 100 eingebracht und drehbar gehalten werden kann, mit einem ersten Führungselement 150 und einem zweiten Führungselement 160 verbunden. Während die erste Trennungsstruktur 120 und die zweite Trennungsstruktur 130 entlang der Bewegungslinie 110 angeordnet sind, sind die beiden Führungselemente 150, 160 entlang einer ersten Linie 170 bezogen auf die zentrale Position 140 einander gegenüberliegend angeordnet, wobei die erste Linie 170 und die Bewegungslinie 110 aufeinander senkrecht stehen. Die Bewegungslinie 110 bezeichnet hierbei nicht nur die Linie, entlang derer die beiden Trennungsstrukturen 120 und 130 angeordnet sind, und damit die Linie entlang der die Wälzkörper angeordnet sind, sondern ebenfalls die Richtung, entlang derer sich die Wälzkörper später in dem Linearwälzlager bewegen.

Von dem ersten und dem zweiten Führungselement 150, 160 ist wenigstens eines ausgebildet, sodass eine sich entlang der Bewegungslinie erstreckenden Führungsausnehmung eines Linearwälzlagers, die in Fig. 1 nicht gezeigt ist, Kräfte an wenigstens zwei räumlich getrennte Punkte zu beiden Seiten des betreffenden Führungselements auf dieses ausüben kann, um eine Führung des Halters 100 in einem Lastbereich, einem Rücklaufbereich oder einem Umlenkbereich des Linearwälzlagers zu ermöglichen. Das betreffende Führungselement, bei dem es sich zumindest bei dem in Fig. 1 gezeigten Ausführungsbeispiel sowohl um das erste Führungselement 150 als auch um das zweite Führungselement 160 handelt, ist nun hinsichtlich seiner Form derart ausgestaltet, dass eine sich in der Bewegungslinie 110 erstreckende Führungsausnehmung mit zwei parallelen Führungsseitenflächen an mehr als einer Position Kräfte entlang einer Führungslinie 180 eine Kraft auf das betreffende Führungselement 150, 160 und damit auf den Halter 100 ausüben kann. Die Führungslinie 180 steht hierbei sowohl auf der Bewegungslinie 110 als auch auf der ersten Linie 170 senkrecht, sodass die drei Linien 110, 170, 180 ein kartesisches Koordinatensystem definieren. Daher können beispielsweise die Bewegungslinie 110 mit einer X-Achse oder X-Richtung, die Führungslinie 180 mit einer Y-Achse oder Y-Richtung und die erste Linie 170 mit einer Z-Achse oder Z-Richtung identifiziert werden. Als Kraft wird in diesem Zusammenhang auch ein Einwirken lediglich einer Kraftkomponente entlang der entsprechenden Richtung oder der entsprechenden Linie verstanden.

Das wenigstens eine Führungselement 150, 160 ist nun derart ausgebildet, dass die beiden zuvor genannten Führungsseitenflächen der Führungsausnehmung an mehr als einer Position jeweils an wenigstens zwei entlang der Bewegungslinie 110 räumlich getrennten Punkten eine Kraft auf das betreffende Führungselement 150, 160 und damit auf den Halter 100 entlang der Führungslinie ausüben kann. Diese Punkte sind nicht gezwungenermaßen ortsfeste Punkte, die bezogen auf den Halter 100 oder das betreffende Führungselement 150, 160 an einem bestimmten Ort stehend anzutreffen sind, sondern können vielmehr innerhalb des betreffenden Führungselements 150, 160 in verschiedenen Positionen anzutreffen sein.

Da bei dem in Fig. 1 gezeigten Ausführungsbeispiel eines Halters 100 sowohl das erste Führungselement 150 als auch das zweite Führungselement 160 entsprechend ausgebildet ist, um diese Kräfte entlang der Führungslinie 180 aufzunehmen, weist der Halter 100 jeweils vier erste Punkte 190 und vier zweite Punkte 200 auf, die typischerweise außerhalb der zentralen Position 140 an den in Richtung der Führungslinie 180 am weitesten hervor stehenden Punkten der beiden Führungselemente 150, 160 liegen.

Um gerade eine ausreichende Führungsstabilität des Halters 100 in einem Umlenkbereich zu ermöglichen, liegt bei vielen Ausführungsbeispielen eines Halters 100 zwischen jeweils einem ersten Punkt 190 und einem zugehörigen zweiten Punkt 200, also beispielsweise zwischen dem ersten Punkt 190-1 und dem zweiten Punkt 200-1 des ersten Führungselements 150 ein Abstand von wenigstens einem 0.2-fachen einer Gesamtlänge des Halters 100 entlang der Bewegungslinie 110. Bei anderen Ausführungsbeispielen können die betreffenden Führungselemente 150, 160 auch so ausgebildet sein, dass zwischen diesen beiden Punkten 190, 200 ein größerer Abstand liegt, der beispielsweise wenigstens ein 0.3-faches, wenigstens ein 0.4-faches, wenigstens ein 0.5-faches, wenigstens ein 0.6-faches, wenigstens ein 0.7-faches oder wenigstens ein 0.8-faches des Werts der Gesamtlänge des Halters 100 entlang der Bewegungslinie 110 beträgt.

Bei der genauen konstruktiven Ausführung eines entsprechenden Führungselements 150, 160 und damit des Halters 100 sind unterschiedliche, sich zum Teil widersprechende bzw. gegenläufige technische Effekte zu berücksichtigen. Je weiter der betreffende erste Punkt 190 von dem betreffenden zweiten Punkt 200 entfernt ist, desto größer ist aufgrund dieses Abstandes auch ein Drehmoment, welches einem Verdrehen des betreffenden Halters 100 innerhalb der Führungsausnehmung entgegenwirkt. Hierbei ist weniger der Abstand zwischen dem ersten Punkt 190 und dem betreffenden zweiten Punkt 200 ausschlaggebend, sondern vielmehr der sich daraus ergebende Abstand zu einem Mittelpunkt bzw. Schwerpunkt des Halters 100.

Andererseits kann ein entsprechend gewählter Abstand der beiden Punkte 190, 200 dazu beitragen, dass der Halter 100 nur noch sehr bedingt besonders kleine Krümmungsradien in einem Umlenkbereich eines Linearwälzlagers durchlaufen kann. Es kann also ratsam sein, die beiden Führungselemente 150, 160 hinsichtlich des Abstandes der beiden Punkte 190, 200 einem Linearwälzlager anzupassen, um einen möglichst optimalen Wert zu erhalten.

Bei dem in Fig. 1 gezeigten Ausführungsbeispiel eines Halters wird der Abstand der betreffenden ersten und zweiten Punkte 190, 200 durch einen entsprechenden ebenen Seitenflächenabschnitt 210 unterstützt, der sich entlang der Bewegungslinie 110 erstreckt und an einer der zentralen Position 140 in Richtung der ersten Linie 170 abgewandten Seite angeordnet ist. Dadurch begrenzt der Seitenflächenabschnitt 210 zumindest abschnittsweise den Halter 100 in dieser Richtung. Durch die ebene Ausführung des Seitenflächenabschnitts 210 kann eine Stabilität des Halters 100 in diesem Bereich positiv beeinflusst werden, ohne dass die Lage der betreffenden ersten und zweiten Punkte 190, 200 nachteilig beeinflusst wird. Allerdings handelt es sich hierbei um eine optionale Ausgestaltung des in Fig. 1 gezeigten Halters 100.

Anders ausgedrückt weist der Halter 100 in einer Querschnittsebene, die durch die erste Linie 170 und die Führungslinie 180 aufgespannt wird, sowie in einer Querschnittsebene, die durch die Bewegungslinie 110 und die erste Linie 170 aufgespannt wird in Richtung der ersten Linie 170 jeweils eine äußere Kontur auf, die zumindest in einem Abschnitt einen geraden Verlauf aufweist.

Der Halter 100, der in Fig. 1 gezeigt ist, weist ferner bezüglich beider Führungselemente 150, 160 eine Führungsfläche 220 auf, die ausgebildet ist, um über die Punkte 190, 200 die betreffenden Kräfte aufzunehmen. Anders ausgedrückt liegen die Punkte 190, 200 in der Führungsfläche 220.

Bei dem in Fig. 1 gezeigten Halter 100 gemäß einem Ausführungsbeispiel, aber auch bei anderen Ausführungsbeispielen weisen die Führungsflächen 220 bzw. die wenigstens eine Führungsfläche eines entsprechenden Führungselements 150, 160 einen Abschnitt 230 auf, der in einer Querschnittsebene, die durch die Führungslinie 180 und die Bewegungslinie 110 aufgespannt wird, in einem zentralen Bereich einer Querschnittsfläche des Halters 110 in der Querschnittsebene eine Krümmung zu einem Mittelpunkt der Querschnittsfläche hin aufweist. Anders ausgedrückt ist der Abschnitt 230 derart ausgestaltet und kann so beispielsweise einem minimalen Krümmungsradius der Führungsausnehmung eines Linearwälzlagers in einem Umlenkbereich angepasst sein. Noch anders ausgedrückt kann der Abschnitt 230 eine kreissegmentförmige Begrenzungslinie in der Querschnittsebene aufweisen, die durch die Bewegungslinie 110 und die Führungslinie 180 aufgespannt wird, deren Radius wenigstens einem minimalen Radiuswert der Führungsausnehmung in dem Umlenkbereich des Linearwälzlagers entspricht.

Ein Ausführungsbeispiel eines Halters 100, dass dieses optionale Merkmal aufweist, kann so zusätzlich an die geometrischen Verhältnisse in dem Umlenkbereich des Linearwälzlagers angepasst werden, um die Führungseigenschaft des Halters gegebenenfalls zusätzlich positiv zu beeinflussen.

Das betreffende Führungselement 150, 160 weist somit aufgrund der Ausformung des Abschnitts 230 einen konkaven Mittelsteg auf, der der Geometrie der Umlenkung angepasst und aufgrund der symmetrischen Ausführung des Halters 100 (Halterung, Abstandshalter oder Spacer) kaum falsch montiert werden kann, was die Betriebssicherheit erhöht und dem Montageaufwand positiv beeinflusst, da der Halter 100 beidseitig montiert werden kann.

Der Halter 100 gemäß einem Ausführungsbeispiel, der in Fig. 1 gezeigt ist, ist darüber hinaus symmetrisch bezüglich einer Symmetrieebene ausgebildet, die durch die Bewegungslinie 110 und die erste Linie 170 aufgespannt wird. Diese optionale Ausgestaltung bietet die Möglichkeit, dass ein Zusammenbau bzw. ein Bereitstellen eines Linearwälzlagers zusätzlich dadurch vereinfacht wird, dass ein Halter 100 nicht mehr in einer falschen Orientierung eingebaut werden kann bzw. dies nur noch in seltenen Fällen möglich ist. Aufgrund dieser optionalen Symmetrieeigenschaft, die der Halter 100 aus Fig. 1 aufweist, entspricht beispielsweise die Führungsfläche 220 einer weiteren Führungsfläche 240, die bei anderen Ausführungsbeispielen auf einer der Führungsfläche 220 abgewandten Seite des betreffenden Führungselements 150, 160 angeordnet ist. Anders ausgedrückt kann es im Falle einer symmetrischen Ausgestaltung eines Halters 100 dazu führen, dass die Führungsfläche 220 und die weitere Führungsfläche 240 hinsichtlich ihrer Funktion "zusammenfallen".

Bei anderen Ausführungsbeispielen, bei denen sowohl das erste Führungselement 150 wie auch das zweite Führungselement 160 derart ausgeführt sind, dass diese beiden sowohl erste Punkte 190 als auch zweite Punkte 200 aufweisen, sind die Führungsfläche 220 und die weitere Führungsfläche 240 typischerweise an gegenüberliegenden Seiten des betreffenden Führungselements 150, 160 angeordnet. Die Führungsflächen 220 sind hierbei häufig auf der "gleichen Seite" des Halters 100, also beide ausgehend von der zentralen Position 140 in der gleichen Richtung entlang der Führungslinie 180 angeordnet. Entsprechend sind auch die weiteren Führungsflächen 240 häufig auf der gleichen Seite des Halters 100 angeordnet.

Bei Ausführungsbeispielen eines Halters 100 kann die weitere Führungsfläche 240 optional einen weiteren Abschnitt 250 aufweisen, der auf einer in Fig. 1 nicht eingezeichnete Mittelgerade zuläuft, um die sich entlang der Bewegungslinie 110 erstreckt und den Mittelpunkt der zuvor genannten Querschnittsfläche umfasst. Anders ausgedrückt kann bei Ausführungsbeispielen eines Halters 100 der weitere Abschnitt 250 der weiteren Führungsfläche 240 auf die zuvor genannte Symmetrieebene zu laufen. Im Falle einer symmetrischen Ausgestaltung eines Halters 100 kann sich die Form des betreffenden Führungselements 150, 160 entlang der ersten Bewegungslinie bezüglich der Führungslinie 180 verjüngen.

Dies kann es ermöglichen, den Halter 100 auch bezüglich eines äußeren Krümmungsradius an den Umlenkbereich eines Linearwälzlagers anzupassen und so eine seitliche Führung innerhalb dieses Bereichs gegebenenfalls positiv zu beeinflussen. Der weitere Abschnitt 250 kann hierbei beispielsweise gerade bzw. eben oder aber auch in Form eines Kreissegments ausgeführt sein, welches sich hinsichtlich seines Radius an den äußeren Krümmungsradius der Führungsausnehmung in dem Umlenkbereich anlehnt bzw. diesen zumindest nicht übersteigt.

Der Halter 100, während Fig. 1 gezeigt ist, weist darüber hinaus besonders geformte Trennungsstrukturen 120, 130 auf. Bei anderen Ausführungsbeispielen ist es nicht notwendig, beide Trennungsstrukturen 120, 130 symmetrisch auszuführen oder auch mit der nachfolgend beschriebenen Struktur auszuführen.

Die beiden in Fig. 1 gezeigten Trennungsstrukturen 120, 130 sind ausgebildet, um den Wälzkörper von einem benachbarten Wälzkörper entlang der Bewegungslinie 110 räumlich zu trennen. Hierbei weisen sie eine Ausnehmung 260 auf, die ausgebildet ist, um ein Schmiermittel bzw. eine entsprechende Menge eines Schmiermittels aufzunehmen. Hierdurch ist es möglich, den Schmierstoff effektiv an einer Position der Wälzkörper heranzuführen, an denen sie sich am nächsten kommen. Anders ausgedrückt kann durch das Vorsehen einer solchen Ausnehmung 260, die mit einem entsprechenden Schmierstoff befüllt ist, dieser effektiv an die Kontaktstelle herangeführt werden.

Die Ausnehmung 260 ist bei dem in Fig. 1 gezeigten Ausführungsbeispiel dadurch realisiert, dass die Trennungsstrukturen 120, 130 als ein ringförmiger Ansatz ausgeführt sind, der entlang der Bewegungslinie 110 hohl ist und somit die Ausnehmung 260 bildet. Der ringförmige Ansatz dient somit einerseits zur Kugeltrennung und kann andererseits auch als Schmierstoffaufnahme dienen. Als Schmierstoffe können beispielsweise zähflüssige Schmierstoffe, also beispielsweise Fette zum Einsatz kommen. Werden weniger zähe Schmierstoffe mit einer entsprechend geringen Viskosität während des Betriebs eingesetzt, kann es ratsam sein, zusätzlich ein poröses Material, beispielsweise einen Schwamm oder einen Schaum, in die Ausnehmung 260 einzubringen, sodass dieser auch Schmierstoffe mit geringerer Viskosität aufnehmen und dosiert an die Wälzkörper abgeben kann.

Der Halter 100, wie er in Fig. 1 gezeigt ist, ist ferner ausgebildet, um einen Wälzkörper, der an die zentrale Position 140 eingebracht wird, gegen ein Herausfallen entlang der Führungslinie 180 zu sichern. Zu diesem Zweck kann der Halter 100 derart ausgeformt sein, dass er an in denen der zentralen Position 140 wenigstens teilweise zugewandten Flächen hinsichtlich seiner Form derart ausgeführt ist, dass zumindest zeitweise bei einer entsprechenden Bewegung des Wälzkörpers zu dem Halter 100 ein formschlüssiger Kontakt zwischen beiden hervorgerufen wird. Im Falle eines kugelförmigen Wälzkörpers (Kugel) kann so beispielsweise das erste Führungselement 150 und/oder das zweite Führungselement 160 an einer der zentralen Position 140 zugewandten Seite eine kalottenförmige Fläche zur Kugelhalterung aufweisen.

Anders ausgedrückt halten die kalottenförmige Innenfläche und die angeformten Ringe im Falle eines kugelförmigen Wälzkörpers die Laufkugeln mit Spiel. Dieses Spiel kann gegebenenfalls auch eine asymmetrische Verschiebung entlang der Führungslinie 180 (Y-Richtung) der Kugel in der Umlenkung ohne oder mit einer reduzierten Reibung oder zusätzlichem Kraftaufwand ermöglichen oder gewährleisten.

Aber auch andere entsprechende Formen, beispielsweise eine abschnittsweise sphärische Ausformung oder eine andere Ausformung beispielsweise mithilfe abgesetzter Ringstrukturen kann so ein Herausfallen eines Wälzkörpers aus dem Halter 100 gegebenenfalls verhindern. Auch bei anderen Wälzkörperformen kann gegebenenfalls eine entsprechende Ausformung zumindest eines Teils der der zentralen Position 140 zugewandten Seiten des Halters 100 erfolgen. Beispielsweise kann im Falle eines tonnenförmigen Wälzkörpers eine entsprechende Ausformung ebenfalls implementiert werden.

Ist der Halter 100 optional entsprechend ausgeformt, kann es ratsam sein, diesen aus einem Material zu fertigen, dass eine gewisse Elastizität aufweist, um ein Aufklippen des Halters auf den betreffenden Wälzkörper zu ermöglichen, also ein Aufbringen des Wälzkörpers unter einer kurzzeitigen, im Wesentlichen elastischen Verformung des Halters 100 durchzuführen. Anders ausgedrückt kann es ratsam sein, in einem solchen Fall den Halter aus einem Material zu fertigen, welches elastisch ist. So können Halter gemäß Ausführungsbeispielen beispielsweise einen Kunststoff, ein zähes, biegewechselfestes Material, Polyoxymethylen (POM) oder Polyamide (PA) aufweisen. Selbstverständlich kann ein Halter 100 gemäß einem Ausführungsbeispiel auch vollständig aus einem dieser Materialien bestehen, also beispielsweise als ein Kunststoffteil gefertigt sein. Hierdurch kann es gegebenenfalls möglich sein, entsprechende Halter 100 kostengünstig und einfach herzustellen bzw. zu produzieren.
Fig. 1 zeigt somit ein Ausführungsbeispiel eines Halters 100 in Form eines Halters, der auch als "Spacer", Halterung oder Abstandshalter bezeichnet wird, für eine Kugelführung in einer Profilschienenführung.

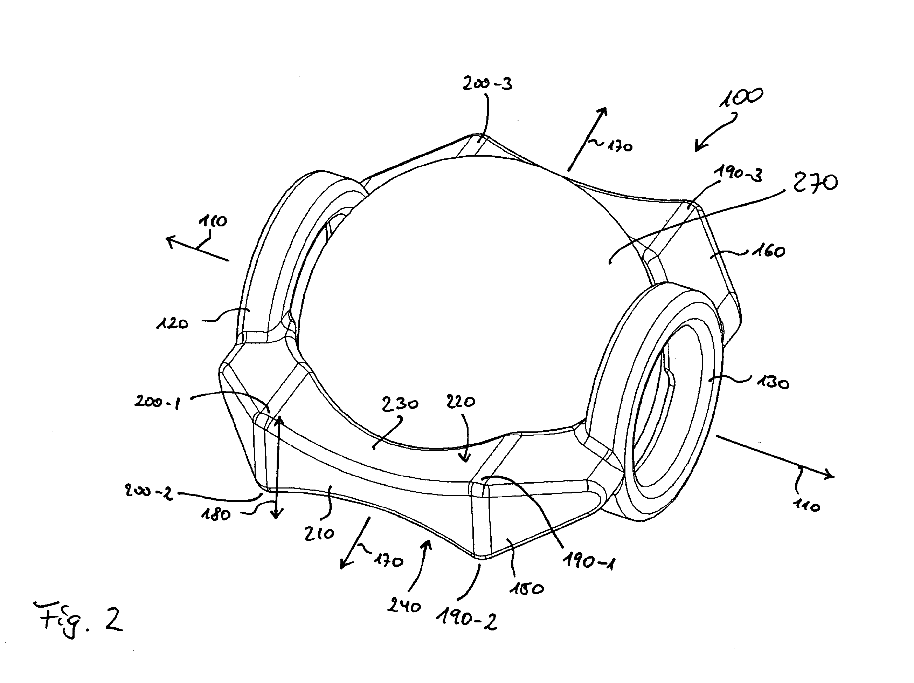

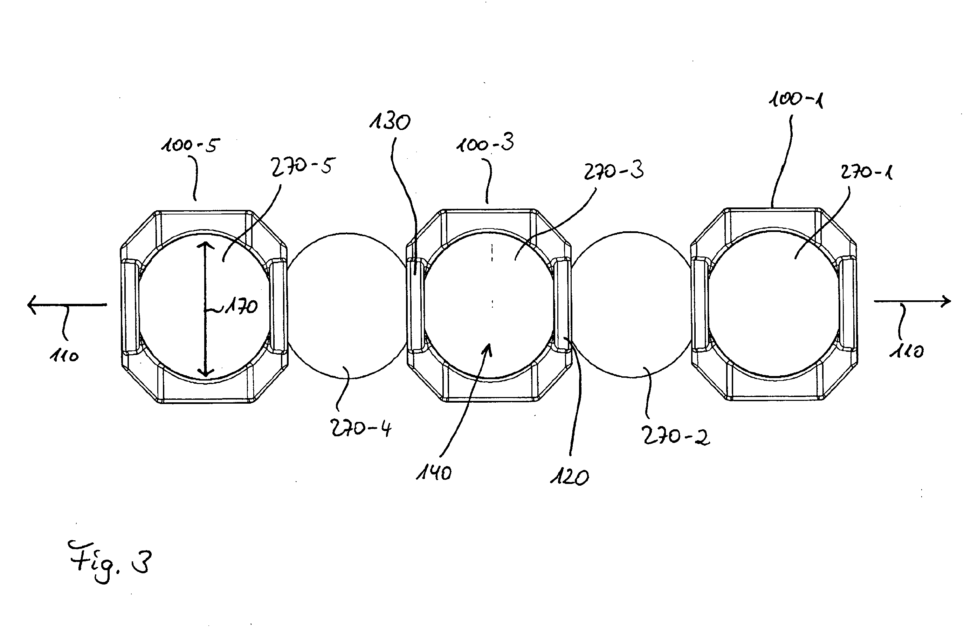

Fig. 2 zeigt den bereits in Fig. 1 gezeigten Halter 100, der nunmehr auf einen Wälzkörper 270, genauer gesagt eine Kugel, aufgeschnappt oder aufgeklickt ist. Der Halter 100 sorgt für eine Trennung der Kugeln, wie dies noch näher im Zusammenhang mit Fig. 3 beschrieben wird. Fig. 2 zeigt den Halter 100 hierbei aus einer um etwa 90° um die Führungslinie 180 gedrehten Perspektive.

Auch wenn Fig. 2 einen kugelförmigen Wälzkörper 270 im Zusammenhang mit dem Halter 100 zeigt, sind Ausführungsbeispiele von Haltern 100 bei Weitem nicht auf kugelförmige Wälzkörper beschränkt. Grundsätzlich sind vielmehr alle Wälzkörperformen, die im Bereich von Linearwälzlagern zum Einsatz kommen können, im Zusammenhang mit Haltern 100 verwendbar.

Fig. 3 zeigt einen Ausschnitt aus einer Anordnung von Wälzkörpern 270, von denen jeder zweite von einem Halter 100 gemäß einem Ausführungsbeispiel umgeben ist. Die Wälzkörper 270 sind hierbei entlang der Bewegungslinie 110 angeordnet.

Genauer gesagt zeigt Fig. 3 eine Aufsicht auf einer Anordnung von fünf Wälzkörpern 270-1, ..., 270-5. Der erste, dritte und fünfte Wälzkörper 270-1, 270-3, 270-5 ist hierbei jeweils von einem Halter 100-1, 100-3, 100-5 umgeben bzw. auf diesen aufgeklippt bzw. aufgeschnappt. Die drei Halter 100 sind hierbei identisch orientiert, wobei Fig. 3 eine Aufsicht auf eine Ebene zeigt, die durch die Bewegungslinie 110 und die erste Linie 170 aufgespannt wird.

Fig. 3 illustriert, wie die beiden Trennungsstruktur und 120, 130 der Halter 100 ein direktes Berühren zweier benachbarter Wälzkörper 270 unterbindet, diese also entlang der Bewegungslinie 110 räumlich beabstandet angeordnet. Die erste Trennungsstruktur 120 des Halters 100-3 trennt so gerade die beiden in der Bewegungslinie 110 benachbart angeordneten Wälzkörper 270-2 und 270-3, von denen der Wälzkörper 270-3 an der zentralen Position 140 des Halters 100-3 angeordnet ist. Wie zuvor erläutert wurde, kann die erste Trennungsstruktur 120 beispielsweise ringförmig ausgestaltet sein, wie dies im Zusammenhang mit Fig. 1 bereits erläutert wurde. Grundsätzlich sind aber auch andere Ausformungen der Trennungsstruktur 120 bei abweichenden Ausführungsbeispielen umsetzbar.

Die zweite Trennungsstruktur 130 des Halters 100-3 trennt darüber hinaus den Wälzkörper 270-3 von dem in der anderen Richtung benachbarten, aber entlang der Bewegungslinie 110 angeordneten Wälzkörper 270-4. Analog zu dem zu der ersten Trennungsstruktur 120 gesagten, kann auch die zweite Trennungsstruktur 130 bei abweichenden Ausführungsbeispielen anders als durch die beschriebene Ringform umgesetzt werden.

In diesem Zusammenhang bietet es sich an, darauf hinzuweisen, dass Objekte und andere Entitäten benachbart sind, wenn zwischen diesen keine weitere Entität der gleichen Gattung oder des gleichen Typs angeordnet ist. Der Begriff "benachbart" umfasst somit sowohl eine unmittelbare als auch eine mittelbare räumliche Anordnung zweier Entitäten, sofern zwischen diesen beiden keine weitere des gleichen Typs angeordnet ist. Insbesondere kann jedoch zwischen zwei benachbarten Entitäten ein Vertreter einer anderen Entität angeordnet sein.

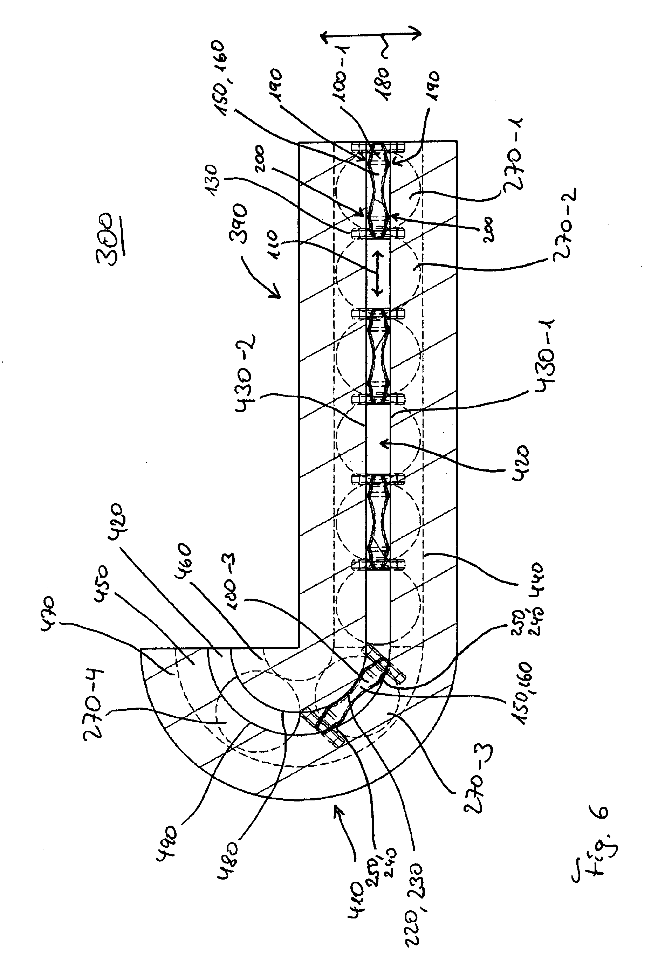

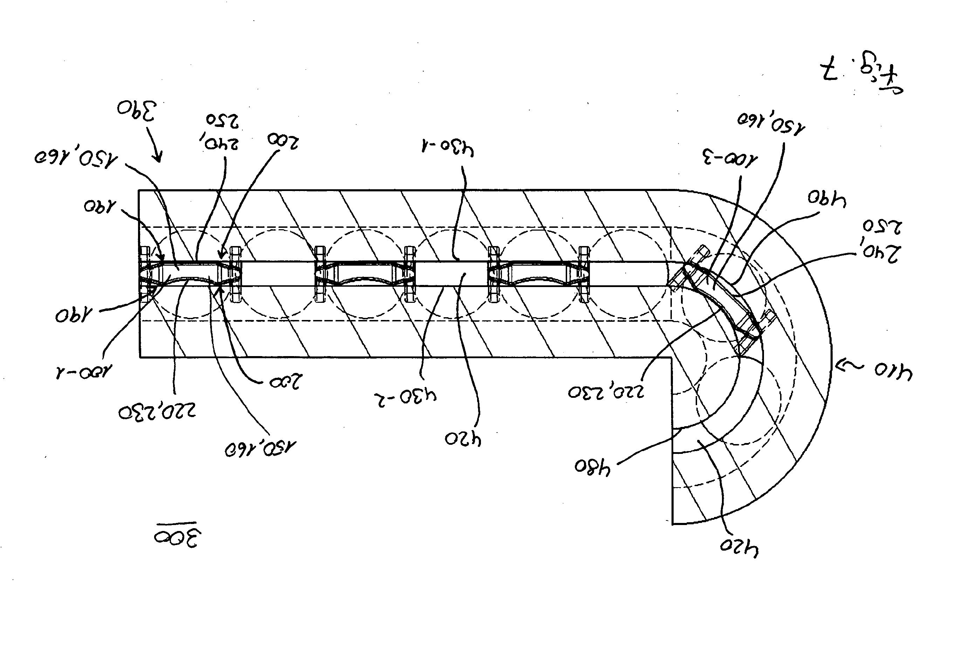

Wie im Zusammenhang mit den Figuren 6 und 7 noch näher ausgeführt wird, werden Wälzkörper 270 und entspreche Halter 100 gemäß Ausführungsbeispielen derart im Rahmen von Linearwälzlagern eingesetzt, dass die Führungselemente 150, 160 der Halter 100 in eine entsprechende Führungsausnehmung eingreifen und in dieser geführt werden. Aufgrund dieser Anordnung sind Halter 100 häufig gleich ausgerichtet, wenn sie in Linearwälzlagern eingesetzt sind. Bei einer Bewegung der Wälzkörper 270 entlang der Bewegungslinie 110 rotieren diese entsprechend um eine Rotationsachse, die hinsichtlich der Orientierung der ersten Linie 170 entspricht. Diese kann daher auch als Rotationsachse oder Rotationslinie bezeichnet werden. Dies gilt nicht nur für kugelförmige Wälzkörper 270, wie sie in den Figuren 1 bis 3 bisher gezeigt wurden, sondern grundsätzlich für alle zuvor genannten Wälzkörper. Um ihrer Eigenschaft als Wälzkörper gerecht zu werden, weisen all diese Wälzkörper eine Rotationsachse und bezüglich dieser Rotationsachse eine entsprechende Rotationssymmetrie auf.

Bei Wälzkörpern 270, die nicht die sphärische Form bzw. Kugelform der in den Figuren 1 bis 3 gezeigten Ausführungsbeispielen aufweisen, wird daher häufig, aber nicht zwingend, eine Anordnung der Führungselemente 150, 160 gewählt, sodass die erste Linie 170 mit der Rotationsachse der Wälzkörper übereinstimmt. Entsprechend sind auch die Führungsausnehmung, in denen die Führungselemente 150, 160 zumindest teilweise eingreifen, bei vielen Ausführungsbeispielen von Linearwälzlagern, die entsprechender Halter 100 umfassen, senkrecht zu den Laufflächen angeordnet.

Wie bereits angedeutet wurde, ist diese geometrische Ausführung bei Weitem nicht zwingend. So kann bereits im Falle kugelförmiger Wälzkörper 270 aufgrund der perfekten Kugel formen und der damit verbundenen beliebigen Orientierung der Rotationsachse von dieser Ausrichtung abgewichen werden. Aber auch bei anderen Wälzkörperformen kann die geometrische Ausformung eines Halters 100 gemäß einem Ausführungsbeispiel entsprechend angepasst werden, um abweichende Winkel von dem zuvor beschriebenen rechten Winkel zu realisieren.

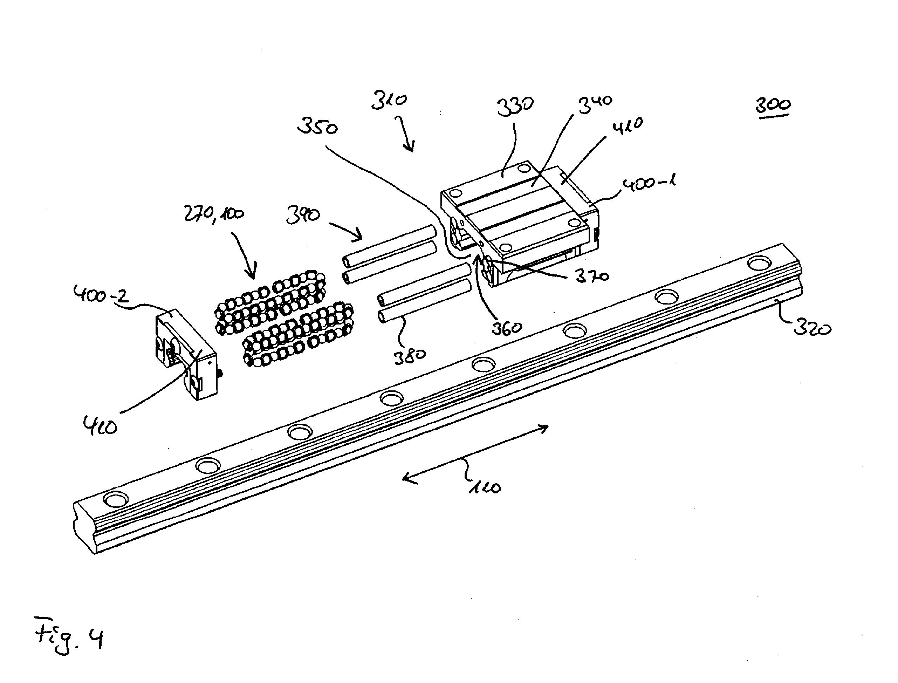

Fig. 4 zeigt eine Explosionsdarstellung einer Profilschienenführung als Ausführungsbeispiel eines Linearwälzlagers. Die Profilschienenführung 300 weist einen Profilschienenwagen 310 sowie eine Profilschiene 320 auf, auf der der Profilschienenwagen 310 linear beweglich ist. Hierbei entspricht die Bewegungslinie 110 einer Ausrichtung der Profilschiene 320 und aufgrund der weiter unten beschriebenen geometrischen Ausformung des Profilschienenwagens 310 auch der des Profilschienenwagens 310.

Der Profilschienenwagen 310 weist hierbei einen Führungswagen 330 auf, der beispielsweise aus einem einsatzgehärteten Stahl gefertigt sein kann. Der Profilschienenwagen 330 weist eine entsprechende Montagefläche 340 auf, die bei dem in Fig. 4 gezeigten Ausführungsbeispiel neben vier Löchern, bei dem es sich beispielsweise um Gewindelöcher handeln kann, zwei weitere Nuten auf, um eine formschlüssige Verbindung eines weiteren Maschinenteils, das in Fig. 4 nicht gezeigt ist, mit den Führungswagen 330 zu ermöglichen.

Der Führungswagen 330 weist entlang der Bewegungslinie 110 eine Ausnehmung 350 auf, die U-förmig ausgeformt ist, und mit der der Führungswagen 330 und damit der Profilschienenwagen 310 die Profilschiene 320 zumindest teilweise von drei Seiten her U-förmig umgreift. In dem Inneren der Ausnehmung 350 weist der Führungswagen 330 wenigstens eine Laufbahn auf, die Teil eines Lastbereichs 360 des Linearwälzlagers ist. Bei dem in Fig. 4 gezeigten Ausführungsbeispiel weist der Führungswagen 330 sogar insgesamt vier Laufbahnen auf, weshalb diese Profilschienenführungen auch als vierreihige Profilschienenführungen bezeichnet werden.

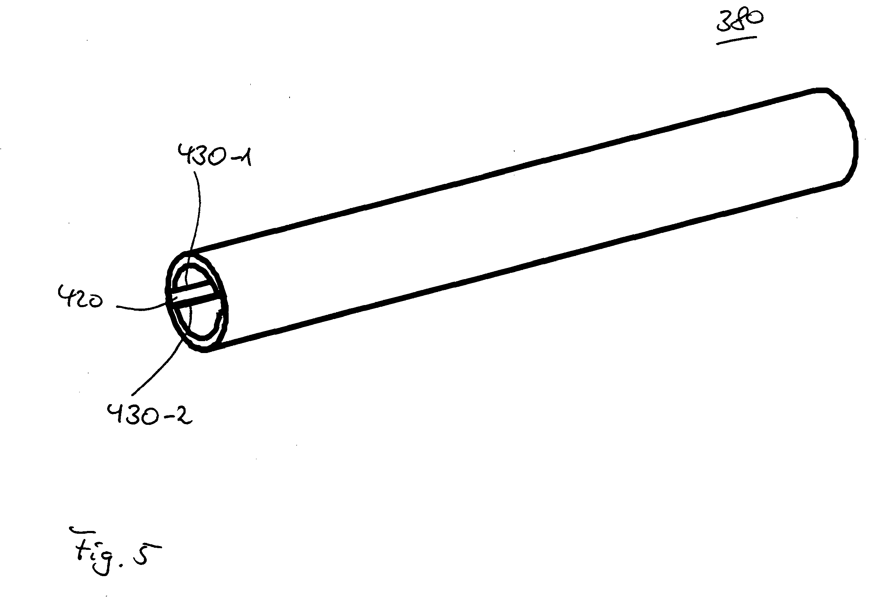

Der Führungswagen 330 weist ferner vier Bohrungen 370 auf, in die eine entsprechende Anzahl von Führungsrohren 380 einführbar sind. Diese Führungsrohre 380 werden näher im Zusammenhang mit Fig. 5 beschrieben.

Ein Rücklaufbereich 390 der Profilschienenführungen 300 umfasst bei dem in Fig. 4 gezeigten Ausführungsbeispiel eines Linearwälzlagers eine Bohrung 370 und ein entsprechendes Führungsrohr 380. In dem Rücklaufbereich 390 werden die Wälzkörper 270 und gegebenenfalls die diese umgebenden Halter 100, die den Lastbereich 360 durchlaufen haben, zurückgeführt, um erneut in dem Lastbereich 360 eingebracht zu werden.

Zu diesem Zweck weist der Profilschienenwagen 310 jeweils an einer Stirnseite des Führungswagens 330 entlang der Bewegungslinie 110 jeweils eine Endplatte 400 auf, in denen die Umlenkbereiche gebildet sind. Die Endplatten 400-1 und 400-2 können beispielsweise aus einem Kunststoff, beispielsweise einem verstärkten Polyoxymethylen (POM) gefertigt sein oder dieses aufweisen, und mit einer Vorsatzdichtung abgedichtet sein. So können die Endplatte 400 beispielsweise optional ebenso ausgebildet sein, um neben dem Umlenkbereich 410 auch ein Schmiermittelreservoir aufzuweisen, welches zur Schmierung der Wälzkörper, der Laufbahnen und gegebenenfalls der Profilschiene verwendet werden kann. Ebenso kann optional die Endplatte 400 weitere Dichtelemente oder ein Abstreifelement umfassen.

Die in Fig. 3 gezeigte Anordnung ... - Halter mit Kugel - Kugel - Halter mit Kugel - ... sorgt somit für eine Trennung der Wälzkörper, wodurch die Reibung, gegebenenfalls auch eine Geräuschentwicklung reduziert bzw. in manchen Situationen sogar erheblich reduziert werden kann.

Während also Fig. 3 mehrere Halter 100 gemäß Ausführungsbeispielen zeigt, von denen auf jeder zweiten Kugel (Wälzkörper 270) ein entsprechender Halter 100 aufgeschnappt war, um eine direkte Berührung der einzelnen Wälzkörper zu vermeiden, zeigt Fig. 4 nunmehr einen Einbau dieser in einem Profilschienenwagen 310.

Anders ausgedrückt zeigt Fig. 4 ein Ausführungsbeispiel eines Linearwälzlagers 310 mit einer Vielzahl von Wälzkörpern 270, wobei wenigstens zwei der Wälzkörper 270 jeweils in einem Halter 100 gemäß einem Ausführungsbeispiel angeordnet sind. Zwischen zwei Wälzkörpern 270, die jeweils in einem Halter 100 angeordnet sind, ist höchstens ein Wälzkörper 270 ohne einen entsprechenden Halter angeordnet. Allerdings, wie dies Fig. 4 auch zeigt, ist es durchaus möglich, Wälzkörper mit entsprechenden Haltern direkt nebeneinander anzuordnen.

Die Halter 100 gemäß Ausführungsbeispielen sind hierbei ausgebildet, um die Wälzkörper drehbar aufzunehmen. Wie bereits zuvor im Zusammenhang mit Fig. 1 beschrieben wurde, weisen die Halter 100 an einer Innenseite, die der zentralen Position 140 zugewandt ist, eine Form auf, um die Wälzkörper 270 drehbar zu halten.

Das in Fig. 4 gezeigte Ausführungsbeispiel eines Linearwälzlagers umfasst hierbei einen Lastbereich 360, indem die Vielzahl der Wälzkörper 270 angeordnet ist, und der ausgebildet ist, um die Wälzkörper zusammen mit dem Halter 100 aufzunehmen. Dies kann beispielsweise dadurch geschehen, dass zwischen den Laufbahnen des Profilschienenwagens 310 und der entsprechenden Gegenlaufbahn der Profilschiene 320 eine entsprechende Ausnehmung oder Lücke vorgesehen ist. Häufig werden bei Linearwälzlagern gemäß Ausführungsbeispielen wenigstens 40 % der Wälzkörper 270 in einem Halter 100 gemäß einem Ausführungsbeispiel angeordnet. Das in Fig. 4 gezeigte Linearwälzlager umfasst ferner wenigstens einen, im vorliegenden Fall zwei Umlenkbereiche 410, sowie einen Rücklaufbereich 390, wobei der oder die Umlenkbereiche 410 zwischen dem Rücklaufbereich 390 und dem Lastbereich 360 angeordnet sind. Sowohl der wenigstens eine Umlenkbereich 410 wie auch der Rücklaufbereich 390 sind hierbei ausgebildet, um die Wälzkörper 270 zusammen mit den Haltern 100 aufzunehmen.

Das Linearwälzlager kann hierbei derart ausgebildet sein, dass ein Herausfallen der Wälzkörper in einer zu der Laufbahn des Lastbereichs senkrechten Richtung unterbunden wird, indem ein entsprechendes Rückhalteelement vorgesehen ist, welches gerade dazu ausgebildet ist, diese Funktion zu übernehmen. Dies kann beispielsweise in Form eines Vorsprungs des Führungswagens 330 im Bereich der einen oder mehreren Laufbahnen des Führungswagens 330 umgesetzt werden.

Fig. 5 zeigt so ein Führungsrohr 380, welches in einer der Bohrungen 370 des Rücklaufbereichs 390 einführbar ist. Das Führungsrohr 380 weist hierbei einen Innendurchmesser auf, der denen der Wälzkörper so angepasst ist, dass diese das Führungsrohr 380 passieren können.

Um eine Aufnahme der Halter 100 zu ermöglichen, weist das Führungsrohr 380 ferner wenigstens eine, häufig zwei oder mehr Führungsausnehmungen 420 auf. Das in Fig. 5 gezeigte Führungsrohr 380 weist zwei gegenüberliegende Führungsausnehmungen 420 auf, die als Nute in einer Außenwand des Führungsrohrs 380 gebildet sind. Die Führungsausnehmungen 420 weisen hierbei wenigstens abschnittsweise zwei parallele Führungsseitenflächen 430-1, 430-2 auf, die im Falle einer Bestückung mit Wälzkörpern 270 und entsprechenden Haltern 100 die entsprechenden Kräfte bzw. Kraftkomponenten auf die Führungselemente 150, 160 des Halters 100 übertragen oder auf diese ausüben.

Selbstverständlich können bei anderen Ausführungsbeispielen der Rücklaufbereich 390 und entsprechende Führungsausnehmungen 420 durch andere konstruktive Merkmale umgesetzt werden.

Fig. 6 zeigt eine Querschnittsdarstellung durch ein Linearwälzlager 300 gemäß einem Ausführungsbeispiel, wobei der Lastbereich 360 nicht dargestellt ist. So konzentriert sich die Darstellung der Fig. 6 auf den Rücklaufbereich 390 und einen Umlenkbereich 410. In dem Rücklaufbereich 390 ist eine Mehrzahl von Wälzkörpern 270 angeordnet, von denen jeder zweite wiederum in einem Halter 100 gemäß einem Ausführungsbeispiel angeordnet ist, wie dies zuvor im Zusammenhang mit den Figuren 1 bis 3 erläutert wurde. So zeigt Fig. 6 beispielsweise einen ersten Wälzkörper 270-1, der von einem Halter 100-1 gemäß einem Ausführungsbeispiel gehalten wird. Der in der Bewegungslinie 110 unmittelbar benachbarte Wälzkörper 270-2 ist im Unterschied hierzu nicht von einem Halter 100 umgeben. Diese beiden Wälzkörper 270 werden durch die zweite Trennungsstruktur 130 des Halters 100-1 voneinander räumlich getrennt.

Die Wälzkörper 270 durchlaufen hierbei das Führungsrohr 380, von dem in Fig. 6 nur eine innere Begrenzungsfläche 440 als gestrichelte Linie eingezeichnet ist, die dem inneren Durchmesser des Führungsrohrs 380 entspricht.

Fig. 6 zeigt darüber hinaus jedoch die Führungsausnehmung 420 mit den beiden entlang der Bewegungslinie 110 parallel verlaufenden Führungsseitenflächen 430-1, 430-2. In dieser Führungsausnehmung 420 greifen die Führungselemente 150 bzw. 160 ein. Hierdurch können die Führungsseitenflächen 430 der Führungsausnehmung 420 jeweils eine Kraft auf das Führungselement 150 bzw. 160 über die ersten bzw. zweiten Punkte 190, 200 ausüben. Wie bereits im Zusammenhang mit Fig. 1 beschrieben wurde, sind diese bei der Verwendung eines Halters 100, wie er in Fig. 1 gezeigt ist, in dem Bereich angeordnet, in dem die Führungselemente 150 bzw. 160 entlang der Führungslinie 180 in dem Bereich, indem diese in die Führungsausnehmung 420 eingreifen, die größte Erstreckung aufweist.

Treten die Wälzkörper 270 in den Umlenkbereich 410 ein, werden sie durch diesen in den in Fig. 6 nicht gezeigten Lastbereich überführt, und folgen einer entsprechend gekrümmten Form, denen der Umlenkbereich den Wälzkörpern 270 aufzwingt. Bei dem in Fig. 6 gezeigten Ausführungsbeispiel eines Linearwälzlagers 300 weist der Umlenkbereich 410 einen Umlenkbereich 450 auf, der in der in Fig. 6 gezeigten Ebene durch eine innere Begrenzungsfläche 460 und einer äußere Begrenzungsfläche 470 räumlich beschränkt ist.

Die innere Begrenzungsfläche 460 weist hierbei einen inneren Krümmungsradius, die äußere Begrenzungsfläche 470 einen äußeren Krümmungsradius auf. Im Falle identischer Mittelpunkte der betreffenden Krümmungen ergibt so eine Differenz dieser beiden Radienwerte eine Breite des Umlegungskanals 450, die wenigstens einem Durchmesser der Wälzkörper 270 senkrecht zu deren Rotationsachse entsprechen sollte, damit diese den Umlenkbereich 450 passieren können. Entsprechend weist auch die Führungsausnehmung 420, die sich ebenfalls in den Umlenkbereich 410 erstreckt, in diesem Bereich eine innere Seitenführungsfläche 480 und einer äußere Seitenführungsfläche 490 auf, wobei die innere Seitenführungsfläche 480 einen inneren Krümmungsradiuswert und die äußere Seitenführungsfläche 490 einen äußeren Krümmungsradiuswert aufweist.

Wie bereits im Zusammenhang mit Fig. 1 beschrieben wurde, weist der Halter 100 (in Fig. 6: Halter 100-3) in dem betreffenden Führungselement 150 bzw. 160 einen Abschnitt 230 der Führungsfläche 220 auf, der dem inneren Krümmungsradius der inneren Seitenführungsfläche 480 in dem Umlenkbereich 410 angepasst ist. Hierdurch ist es möglich, dass in dem Umlenkbereich 410 sich der Halter 100 über den Abschnitt 230 des betreffenden Führungselements 150 bzw. 160 an der inneren Seitenführungsfläche 480 abstützt bzw. dass diese eine Kraft auf den Halter 100 ausübt.

Entsprechend weist der in Fig. 1 gezeigte Halter 100 ebenfalls eine weitere Führungsfläche 240 mit einem entsprechenden weiteren Abschnitt 250 auf, die wiederum hinsichtlich ihrer geometrischen Ausgestaltung in der zuvor beschriebenen Art und Weise dem äußeren Krümmungsradius der äußeren Seitenführungsfläche 490 in dem Umlenkbereich 410 angepasst ist. Hierdurch ist es möglich, dass der Halter 100 über den weiteren Abschnitt 250 bzw. über die weiteren Abschnitte 250 an der Führungsausnehmung 420 in dem Umlenkbereich 410 abstürzt, um hinsichtlich der Führung unterstützt zu werden.

Wie das in Fig. 6 gezeigte Ausführungsbeispiel illustriert, kann es möglich sein, eine entsprechende Führungsausnehmung 420 sowohl in dem Umlenkbereich 410 als auch in dem Rücklaufbereich 390 vorzusehen, bei der die betreffenden Begrenzungsflächen 460, 470 bzw. Seitenführungsflächen 480, 490 einen identischen Abstand aufweisen. Hierdurch kann es möglich sein, aufgrund von entstehenden Kanten eine Wahrscheinlichkeit eines Verhakens der Halter 100 und damit der Wälzkörper 270 zu reduzieren bzw. vollständig sogar zu unterbinden. Unabhängig hiervon kann es trotzdem ratsam sein, gerade in einem Übergangsbereich zwischen Umlenkbereich und Rücklaufbereich bzw. Umlenkbereich und Lastbereich einen Abstand der entsprechenden Begrenzungsflächen bzw. Seitenführungsflächen vorzunehmen.

Fig. 7 zeigt eine Fig. 6 sehr ähnliche Darstellung eines weiteren Ausführungsbeispiels eines Linearwälzlagers 300, welches sich von dem in Fig. 6 gezeigten nur durch die Wahl der Halter 100 unterscheidet. Während der in Fig. 6 zum Einsatz gebrachte Halter 100 symmetrisch zu einer sich in der Bewegungslinie 110 und der ersten Linie 170 erstreckenden Symmetrieebene ist, wie dies auch im Zusammenhang mit Fig. 1 näher beschrieben wurde, ist der Halter 100 gemäß einem Ausführungsbeispiel, wie er in Fig. 7 im Querschnitt gezeigt ist, hinsichtlich dieser Symmetrieebene nicht mehr symmetrisch ausgeführt. So weist wenigstens eines der beiden Führungselemente 150, 160 dieses Halters 100 eine weitere Führungsfläche 240 auf, die im Unterschied zu der Führungsfläche 220 keinen konvex ausgeformten Abschnitt aufweist. Während bei den zuvor beschriebenen Haltern 100 aufgrund der diesen innewohnenden Symmetrie die weitere Führungsfläche 240 symmetrisch zu der Führungsfläche 220 ausgeführt war, weist die weitere Führungsfläche 240 des in Fig. 7 gezeigten Halters 100 nunmehr in einem zentralen Bereich einen ebenen Abschnitt auf, während die der weiteren Führungsfläche 240 gegenüberliegende Führungsfläche 220 auch weiterhin den zuvor beschriebenen konkaven Abschnitt 230 aufweist.

Wie am Beispiel des Halters 100-1 in den Rücklaufbereich 390 zu erkennen ist, ermöglicht dieser ebene Abschnitt der weiteren Führungsfläche 240 auch weiterhin eine Einleitung von Kräften über die Führungsseitenflächen 430-1 der Führungsausnehmung 420 über den ersten und zweiten Punkt 190, 200. Anders ausgedrückt ist durch die ebene Ausführung des weiteren Abschnitts 250 der weiteren Führungsfläche 240 diese an die gerade verlaufenden Führungsseitenflächen 430-1 in dem Rücklaufbereich 390 angepasst, während die konkave Form des Abschnitts 230 der Führungsfläche 220 analog zu der in Fig. 6 gezeigten Situation ebenfalls eine Führung an der Führungsseitenfläche 430-2 über die Punkte 200, 190 ermöglicht.

In dem Umlenkbereich 410 beeinflusst die nunmehr ebene Ausführung des weiteren Abschnitts 250 der weiteren Führungsfläche 240 die Führung des Halters 110 in dem gekrümmten Abschnitt der Führungsausnehmung 420 nicht. Anders ausgedrückt kann die äußere Seitenführungsfläche 490 in diesem Bereich unverändert zu der in Fig. 6 gezeigten beibehalten werden.

Der Halter 100 gemäß einem Ausführungsbeispiel, der in Fig. 7 gezeigt ist, ermöglicht so einerseits eine zusätzliche Stabilisierung des Halters 100 in den Bereich der Führungselemente 150 bzw. 160, da aufgrund der ebenen Ausführung mehr Material im Vergleich zu einer konkaven Ausführung zur Verfügung steht. Der somit einhergehende Gewinn an Formstabilität kann jedoch gegebenenfalls durch ein Risiko einer Fehlmontage aufgrund der fehlenden oder nicht mehr vollständigen Symmetrie des Halters 100 ausgeglichen sein.

Ein Verfahren zum Bereitstellen eines Linearwälzlagers mit Wälzkörpern gemäß einem Ausführungsbeispiel umfasst ein Bereitstellen des Linearwälzlagers, ein Bereitstellen einer Vielzahl von Wälzkörpern, sodass wenigstens zwei der Wälzkörper jeweils in einem Halter gemäß einem Ausführungsbeispiel angeordnet sind. Es umfasst darüber hinaus ferner ein Bestücken des Linearwälzlagers mit den Wälzkörpern, sodass zwischen zwei Wälzkörpern, die jeweils einem Halter 100 gemäß einem Ausführungsbeispiel zugeordnet sind, höchstens ein Wälzkörper 270 und ein entsprechender Halter angeordnet ist. Bei weiteren Ausführungsbeispielen kann so ein solches Verfahren ferner ein Bereitstellen des Linearwälzlagers in einer Form umfassen, wie dieses bereits zuvor beschrieben wurde, also beispielsweise ein Bereitstellen derart, dass der Lastbereich des Linearwälzlagers ausgebildet ist, um die Wälzkörper zusammen mit den Haltern 100 aufzunehmen. Ebenso kann das Bereitstellen der Wälzkörper ein Versorgen von wenigstens einer Trennungsstruktur mit einem Schmiermittel umfassen, wobei die Halter ausgebildet sind, um ein entsprechendes Schmiermittel in einer Ausnehmung der wenigstens einen Trennungsstruktur aufzunehmen.

Ausführungsbeispiele von Linearwälzlagern sind bisher im Zusammenhang mit Profilschienenführungen beschrieben worden. Bei Ausführungsbeispielen können jedoch auch andere, abweichende Bauformen, als die bisher beschriebenen, zum Einsatz kommen. So können auch Profilschienenführungen mit einer abweichenden Anzahl von Reihen oder Anordnungen von Wälzkörpern verwendet werden. Neben vierreihigen Linearwälzlagern können so beispielsweise auch zwei-, sechs- oder achtreihige Linearwälzlager verwendet werden. Auch kann gegebenenfalls eine Umsetzung eines Profilschienenwagens mit Hilfe ohne die beschriebene Umsetzung mit Endplatten und einem Führungswagen verwendet werden. Auch sind Ausführungsbeispiele bei Weitem nicht auf Profilschienenführungen beschränkt. So können auch andere Linearsysteme mithilfe von Ausführungsbeispielen implementiert und umgesetzt werden.

### Bezugszeichenliste

- 100: Halter
- 110: Bewegungslinie
- 120: erste Trennungsstruktur
- 130: zweite Trennungsstruktur
- 140: zentrale Position
- 150: erstes Führungselement
- 160: zweites Führungselement
- 170: erster Linie
- 180: Führungslinie
- 190: erster Punkt
- 200: zweiter Punkt
- 210: Seitenflächenabschnitt
- 220: Führungsfläche
- 230: Abschnitt
- 240: weitere Führungsfläche
- 250: weitere Abschnitt
- 260: Ausnehmung
- 270: Wälzkörper
- 300: Linearwälzlager, Profilschienenführung
- 310: Profilschienenwagen
- 320: Profilschiene
- 330: Führungswagen
- 340: Montagefläche
- 350: Ausnehmung
- 360: Lastbereich
- 370: Bohrung
- 380: Führungsrohr
- 390: Rücklaufbereich
- 400: Endplatte
- 410: Umlenkbereich
- 420: Führungsausnehmung
- 430: Führungsseitenfläche
- 440: Begrenzungsfläche
- 450: Umlenkkanal
- 460: innerer Begrenzungsfläche
- 470: äußere Begrenzungsfläche
- 480: innerer Seitenführungsfläche
- 490: äußere Seitenführungsfläche

## Patentansprüche

1. Halter (100) für einen Wälzkörper (270) eines Linearwälzlagers (300), der ausgebildet ist, um genau einen Wälzkörper (270) aufzunehmen und den Wälzkörper (270) von jeweils einem in beiden Richtungen entlang einer Bewegungslinie (110) benachbarten Wälzkörper (270) räumlich zu trennen, wobei der Halter (100) ein erstes Führungselement (150) und ein zweites Führungselement (160) aufweist, die entlang einer ersten Linie (170) angeordnet sind, die senkrecht auf der Bewegungslinie (110) steht, wobei wenigstens eines der Führungselemente (150, 160) ausgebildet ist, sodass in einer sich entlang der Bewegungslinie (110) erstreckenden Führungsausnehmung (420) mit zwei parallelen Führungsseitenflächen (430) an mehr als einer Position jeweils die beiden Führungsseitenflächen (430) jeweils an wenigstens zwei entlang der Bewegungslinie (110) räumlich getrennten Punkten (190, 200) eine Kraft in einer Führungslinie (180) auf das wenigstens eine Führungselement (150, 160) ausüben können, wenn der Halter (100) den Wälzkörper (270) aufgenommen hat, wobei die Führungslinie (180) senkrecht auf der Bewegungslinie (110) und der ersten Linie (170) steht,
wobei wenigstens ein Führungselement (150, 160) des ersten und des zweiten Führungselements wenigstens eine Führungsfläche (220) aufweist, die ausgebildet ist, um von einer der beiden Führungsseitenflächen (430) über die wenigstens zwei räumlich getrennten Punkte (190, 200) eine Kraft entlang der Führungslinie (180) aufzunehmen, wobei die Führungsfläche (220) einen Abschnitt (230) aufweist, der in einer Querschnittsebene, die durch die Führungslinie (180) und die Bewegungslinie (110) aufgespannt wird, in einem zentralen Bereich einer Querschnittsfläche des Halters (100) in der Querschnittsebene eine Krümmung zu einem Mittelpunkt der Querschnittsfläche hin aufweist.

2. Halter (100) nach Anspruch 1, bei dem die beiden räumlich getrennten Punkte bezüglich jeweils beider Führungsseitenflächen (430) jeweils einen Abstand von wenigstens einem 0.2-fachen einer Gesamtlänge des Halters (100) entlang der Bewegungslinie (110) aufweisen.

3. Halter (100) nach einem der vorhergehenden Ansprüche, bei dem wenigstens ein Führungselement (150, 160) des ersten und des zweiten Führungselements einen ebenen Seitenflächenabschnitt (210) aufweist, der sich in einem zentralen Bereich des wenigstens einen Führungselements (150, 160) entlang der Bewegungslinie (110) erstreckt und den Halter (100) in Richtung der ersten Linie (170) wenigstens abschnittsweise begrenzt.

4. Halter (100) nach einem der vorhergehenden Ansprüche, bei dem das wenigstens eine Führungselement (150, 160) ferner eine weitere Führungsfläche (240) aufweist, die auf einer der Führungsfläche (220) abgewandten Seite des wenigstens einen Führungselements (150, 160) angeordnet ist, wobei die weitere Führungsfläche (240) einen weiteren Abschnitt (250) aufweist, der in der Querschnittsebene auf eine Mittelgerade zuläuft, wobei die Mittelgerade den Mittelpunkt umfasst und sich entlang der Bewegungslinie (110) erstreckt.

5. Halter (100) nach einem der vorhergehenden Ansprüche, bei dem das wenigstens eine Führungselement (150, 160) symmetrisch bezüglich einer Symmetrieebene ausgebildet ist, die durch die Bewegungslinie (110) und die erste Linie (170) aufgespannt wird.

6. Halter (100) nach Anspruch 4, bei dem die weitere Führungsfläche (240) des wenigstens einen Führungselements (150, 160) des ersten und des zweiten Führungselements in einem zentralen Bereich einen ebenen Abschnitt aufweist.

7. Halter (100) nach einem der vorhergehenden Ansprüche, der wenigstens eine Trennungsstruktur (120, 130) aufweist, die ausgebildet ist, um den Wälzkörper (270) von einem benachbarten Wälzkörper (270) entlang der Bewegungslinie (110) räumlich zu trennen, wobei die Trennungsstruktur (120, 130) eine Ausnehmung (260) aufweist, die ausgebildet ist, um ein Schmiermittel aufzunehmen.

8. Halter (100) nach einem der vorhergehenden Ansprüche, bei dem der Halter (100) ausgebildet ist, um den Wälzkörper (270) gegen ein Herausfallen entlang der Führungslinie (180) zu sichern.

9. Linearwälzlager (300) mit folgenden Merkmalen:
einer Vielzahl von Wälzkörpern (270),
wobei wenigstens zwei der Wälzkörper (270) jeweils in einem Halter (100) gemäß einem der vorhergehenden Ansprüche angeordnet sind; und
wobei zwischen zwei Wälzkörpern (270), die jeweils in einem Halter (100) angeordnet sind, höchstens ein Wälzkörper (270) ohne Halter angeordnet ist.

10. Verfahren zum Bereitstellen eines Linearwälzlagers mit Wälzkörpern (300), umfassend:
Bereitstellen des Linearwälzlagers (300);
Bereitstellen einer Vielzahl von Haltern (100) nach einem der Ansprüchen 1 bis 8;
Bereitstellen einer Vielzahl von Wälzkörpern (270), sodass wenigstens zwei der Wälzkörper (270) jeweils in einem Halter (100) angeordnet sind;
Bestücken des Linearwälzlagers (300) mit den Wälzkörpern (270), sodass zwischen zwei Wälzkörpern (270), die jeweils in einem Halter (100) angeordnet sind, höchstens ein Wälzkörper (270) ohne Halter (100) angeordnet ist.

## Claims

1. Holder (100) for a rolling body (270) of a linear anti-friction bearing (300), which holder (100) is configured to receive precisely one rolling body (270) and to spatially separate the rolling body (270) from in each case one adjacent rolling body (270) in both directions along a movement line (110), the holder (100) having a first guide element (150) and a second guide element (160) which are arranged along a first line (170) which lies perpendicularly on the movement line (110), at least one of the guide elements (150, 160) being configured such that, in a guide recess (420) which extends along the movement line (110) with two parallel guide side faces (430), at more than one position, in each case the two guide side faces (430) can exert a force in a guide line (180) on the at least one guide element (150, 160) in each case at at least two spatially separate points (190, 200) along the movement line (110) if the holder (100) has received the rolling body (270), the guide line (180) lying perpendicularly on the movement line (110) and the first line (170),
at least one guide element (150, 160) of the first and the second guide element having at least one guide face (220) which is configured to absorb a force along the guide line (180) from one of the two guide side faces (430) via the at least two spatially separate points (190, 200), the guide face (220) having a section (230) which, in a cross-sectional plane which is defined by the guide line (180) and the movement line (110), has, in a central region of a cross-sectional area of the holder (100), a curvature towards a centre point of the cross-sectional area in the cross-sectional plane.

2. Holder (100) according to Claim 1, in which the two spatially separate points are in each case at a spacing of at least 0.2 times the overall length of the holder (100) along the movement line (110) with regard to in each case both guide side faces (430).

3. Holder (100) according to either of the preceding claims, in which at least one guide element (150, 160) of the first and the second guide element has a planar side face section (210) which extends along the movement line (110) in a central region of the at least one guide element (150, 160) and limits the holder (100) at least in sections in the direction of the first line (170).

4. Holder (100) according to one of the preceding claims, in which, furthermore, the at least one guide element (150, 160) has a further guide face (240) which is arranged on a side of the at least one guide element (150, 160), which side faces away from the guide face (220), the further guide face (240) having a further section (250) which tapers to a centre straight line in the cross-sectional plane, the centre straight line comprising the centre point and extending along the movement line (110).

5. Holder (100) according to one of the preceding claims, in which the at least one guide element (150, 160) is of symmetrical configuration with regard to a plane of symmetry which is defined by the movement line (110) and the first line (170).

6. Holder (100) according to Claim 4, in which the further guide face (240) of the at least one guide element (150, 160) of the first and the second guide element has a planar section in a central region.

7. Holder (100) according to one of the preceding claims which has at least one separating structure (120, 130) which is configured to spatially separate the rolling body (270) from an adjacent rolling body (270) along the movement line (110), the separating structure (120, 130) having a recess (260) which is configured to receive a lubricant.

8. Holder (100) according to one of the preceding claims, in which the holder (100) is configured to secure the rolling body (270) against falling out along the guide line (180).

9. Linear anti-friction bearing (300) having the following features:
a multiplicity of rolling bodies (270),
at least two of the rolling bodies (270) being arranged in each case in a holder (100) according to one of the preceding claims; and
at most one rolling body (270) without a holder being arranged between two rolling bodies (270) which are arranged in each case in a holder (100).

10. Method for providing a linear anti-friction bearing with rolling bodies (300), comprising:
provision of the linear anti-friction bearing (300);
provision of a multiplicity of holders (100) according to one of Claims 1 to 8;
provision of a multiplicity of rolling bodies (270), with the result that at least two of the rolling bodies (270) are arranged in each case in a holder (100);
fitting of the linear anti-friction bearing (300) with the rolling bodies (270), with the result that at most one rolling body (270) without a holder (100) is arranged between two rolling bodies (270) which are arranged in each case in a holder (100).

## Revendications

1. Support (100) pour corps de roulement (270) d'un palier à roulement linéaire (300) qui est conçu pour recevoir précisément un corps de roulement (270) et séparer spatialement le corps de roulement (270) de respectivement un corps de roulement voisin (270) dans les deux sens le long d'une ligne de mouvement (110), le support (100) présentant un premier élément de guidage (150) et un second élément de guidage (160) qui sont disposés le long d'une première ligne (170) qui est en position verticale sur la ligne de mouvement (110), au moins un des éléments de guidage (150, 160) étant réalisé de manière à ce que, dans un évidement de guidage (420) s'étendant le long de la ligne de mouvement (110) comportant deux surfaces latérales de guidage (430), à plus d'une position, respectivement les deux surfaces latérales de guidage (430) puissent exercer respectivement, à au moins deux points (190, 200) séparés spatialement le long de la ligne de mouvement (110), une force dans une ligne de guidage (180) sur l'au moins un élément de guidage (150, 160) une fois que le support (100) a reçu le corps de roulement (270), la ligne de guidage (180) étant en position verticale sur la ligne de mouvement (110) et la première ligne (170),
dans lequel au moins un élément de guidage (150, 160) des premier et second éléments de guidage présente au moins une surface de guidage (220) qui est conçue pour recevoir d'une des deux surfaces latérales de guidage (430), via les au moins deux points séparés spatialement (190, 200), une force orientée le long de la ligne de guidage (180), la surface de guidage (220) présentant un tronçon (230) qui présente, dans un plan de section transversale qui est sous-tendu par la ligne de guidage (180) et la ligne de mouvement (110), dans une partie centrale d'une surface de section transversale du support (100) dans le plan de section transversale, une courbure en direction d'un point médian de la surface de section transversale.

2. Support (100) selon la revendication 1, dans lequel les deux points séparés spatialement présentent respectivement par rapport aux deux surfaces latérales de guidage (430) un espacement représentant au moins 0,2 fois une longueur totale du support (100) le long de la ligne de mouvement (110).

3. Support (100) selon l'une quelconque des revendications précédentes, dans lequel au moins un élément de guidage (150, 160) des premier et second éléments de guidage présente une section de surface latérale plane (210) qui s'étend dans une partie centrale de l'au moins un élément de guidage (150, 160) le long de la ligne de mouvement (110) et limite le support (100) du moins par endroits en direction de la première ligne (170).

4. Support (100) selon l'une quelconque des revendications précédentes, dans lequel l'au moins un élément de guidage (150, 160) présente en outre une autre surface de guidage (240) qui est disposée sur une face détournée de la surface de guidage (220) de l'au moins un élément de guidage (150, 160), l'autre surface de guidage (240) présentant une autre section (250) qui arrive dans le plan de section transversale jusqu'à une droite médiane, la droite médiane englobant le point central et s'étendant le long de la ligne de mouvement (110).

5. Support (100) selon l'une quelconque des revendications précédentes, dans lequel l'au moins un élément de guidage (150, 160) a une conformation symétrique par rapport à un plan de symétrie qui est sous-tendu par la ligne de mouvement (110) et la première ligne (170).

6. Support (100) selon la revendication 4, dans lequel l'autre surface de guidage (240) de l'au moins un élément de guidage (150, 160) des premier et second éléments de guidage présente une section plane dans une partie centrale.

7. Support (100) selon l'une quelconque des revendications précédentes, qui présente au moins une structure de séparation (120, 130) qui est conçue pour séparer spatialement le corps de roulement (270) d'un corps de roulement voisin (270) le long de la ligne de mouvement (110), la structure de séparation (120, 130) présentant un évidement (260) qui est conçu pour recevoir un lubrifiant.

8. Support (100) selon l'une des revendications précédentes, dans lequel le support (100) est conçu pour sécuriser le corps de roulement (270) contre une chute le long de la ligne de guidage (180).

9. Palier à roulement linéaire (300) ayant les caractéristiques suivantes :
une pluralité de corps de roulement (270),
dans lequel au moins deux des corps de roulement (270) sont disposés respectivement dans un support (100) selon l'une des revendications précédentes ; et
dans lequel, entre deux corps de roulement (270), qui sont disposés respectivement dans un support (100), un corps de roulement (270) au plus est disposé sans support.

10. Procédé destiné à la mise en place d'un palier à roulement linéaire (300) comprenant :
la mise en place du palier à roulement linéaire (300) ;
la mise en place d'une pluralité de supports (100) selon l'une des revendications 1 à 8 ;
la mise en place d'une pluralité de corps de roulement (270) de sorte qu'au moins deux des corps de roulement (270) soient disposés respectivement dans un support (100) ;
l'équipement du palier à roulement linéaire (300) avec les corps de roulement (270), de sorte qu'entre deux corps de roulement (270), qui sont disposés respectivement dans un support (100), un corps de roulement (270) au plus soit disposé sans support (100).
